# EUROPÄISCHE PATENTSCHRIFT

(11) **EP 2 065 011 B1**
(45) Veröffentlichungstag und Bekanntmachung des Hinweises auf die Patenterteilung: **22.08.2012**
(21) Anmeldenummer: 09003595.7
(22) Anmeldetag: 17.11.2005
(51) Int. Cl.: A61C 13/00, B23Q 35/10, B24B 17/02

(54) **Kopierfräseinrichtung zur Herstellung von zahntechnischen Werkstücken**
Copy milling device for producing dental workpieces
Dispositif de fraisage par copiage destiné à la fabrication de pièces à usiner dentaires

(30) Priorität: 25.11.2004 AT 19922004; 30.06.2005 AT 11042005
(43) Veröffentlichungstag der Anmeldung: 03.06.2009
(62) Teilanmeldung aus: 05856251.3
(73) Patentinhaber: STEGER, Heinrich, 39031 Bruneck (IT)
(72) Erfinder: STEGER, Heinrich, 39031 Bruneck (IT)
(74) Vertreter: Gangl, Markus

(56) Entgegenhaltungen:
- EP-A- 0 384 908
- EP-A- 0 402 720
- WO-A-92/08420
- WO-A-96/05781
- WO-A-02/076331
- DE-C1- 19 626 174
- GB-A- 576 518
- GB-A- 667 806
- US-A- 361 131
- US-A- 3 100 344
- US-A- 3 382 740
- US-A- 6 101 666
- US-A1- 2004 072 121

## Beschreibung

Die Erfindung betrifft eine Kopierfräseinrichtung zur Herstellung von zahntechnischen Werkstücken, mit den Merkmalen des Oberbegriffs des Anspruchs 1.

Die Verwendung von Kopierfräseinrichtungen zur Herstellung von Werkstücken mit komplizierter Raumform ist bereits seit langem bekannt. Dabei wird mittels einer Tastvorrichtung ein Modellkörper mechanisch abgetastet, wobei die Auslenkungen des Tasterstiftes synchron auf ein motorisch angetriebenes Bearbeitungswerkzeug übertragen werden, und das Bearbeitungswerkzeug in einer spanenden Bearbeitung, z. B. fräsen oder schleifen, einen dem Modellkörper identischen Formkörper aus einem Formrohling herausarbeitet. Bei großen Werkzeugmaschinen erfolgt die Übertragung der Auslenkungen des Tastfühlers mittels einer Regeleinrichtung, für die Herstellung kleiner Formkörper sind derartige Reglereinrichtungen jedoch nicht erforderlich, weshalb die Auslenkungen des Tasterfühlers direkt auf das Bearbeitungswerkzeug übertragen werden und der Tasterfühler und der Werkzeughalter mechanisch miteinander fest gekuppelt sind.

Zur Herstellung von zahnmedizinischen Werkstücken, wie beispielsweise Inlays, Onlays und Kronen, werden neben den bekannten Füllungswerkstoffen wie Dentalamalgane und Gold in zunehmenden Maße oxidkeramische Werkstoffe, die sich durch große Härte auszeichnen, verwendet. Das Verarbeiten solcher Werkstoffe, beispielsweise Zirkon, ist jedoch verhältnismäßig aufwendig. So muss bei der Verwendung von Grünlingen oder zwischengesinterten Formrohlingen der Sinterungsschrumpf, der beim abschließenden Fertigsintern des Werkstückes auftritt, bereits berücksichtigt werden. Werden hingegen bereits fertig gesinterte Formrohlinge verwendet, dauert der Kopierfräsvorgang aufgrund der großen Härte der oxidkeramischen Werkstoffe entsprechend länger, was bei der Verwendung von manuell zu betätigenden Kopierfräseinrichtungen zu Ungenauigkeiten führen kann. In diesem Fall kommen meist sehr teure und komplizierte CAD/CAM-Systeme zum Einsatz, deren Anschaffung jedoch für ein einzelnes Zahnlabor oder gar einen einzelnen Zahnarzt finanziell kaum leistbar ist. Eine Aufgabe der Erfindung ist es, eine gattungsgemäß Kopierfräseinrichtung so weiterzubilden, dass ein Verspannen des Modellkörpers vermieden werden kann.

Dokumente GB 576 518, WO 9605781 oder WO 9208420 offenbaren jeweils Kopierfräseiurichtungen.

Diese Aufgabe wird durch eine Kopierfräseinrichtung mit den Merkmalen des Anspruchs 1 gelöst.

Durch die Anordnung des Modellkörpers in einem scheibenförmigen Halteelement kann ein Verspannen des Modellkörpers vermieden werden. Gemäß der Erfindung ist dabei wenigstens der Modellköper in eine Aufnahmeöffnung eines scheibenförmigen Halteelementes aus Kunststoff eingeklebt, wobei der Umriss der vorzugsweise gefrästen Aufnahmeöffnung der Kontur des Modellkörpers angepasst ist. Gleichzeitig gewährleistet die Anordnung des Formrohlings und des Modellkörpers in einem scheibenförmigen Halteelement zusammen mit der drehbaren Lagerung der Trägerplatte die Zugänglichkeit zum Formrohling bzw. zum Modellkörper von allen Seiten.

Weitere vorteilhafte Ausführungsformen sind in den abhängigen Ansprüchen definiert.

Ein Ausführungsbeispiel sieht vor, dass die Aufhängevorrichtung eine Feder zum Ausgleichen des Gewichts des Auslegers aufweist, die zwischen einem oberhalb des Auslegers an der Kopierfräseinrichtung angeordneten Widerlager und dem Ausleger wirkt. Dadurch wird erreicht, dass der Ausleger mittels der Feder in einer Ruhestellung gehalten wird, sodass die vom Benutzer aufzubringende Kraft zur Bewegung des Auslegers möglichst gering gehalten wird. Günstigerweise ist dabei die Feder mit Ausleger in dem das Bearbeitungswerkzeug und die Tastvorrichtung aufweisenden Abschnitt des Auslegers, vorzugsweise oberhalb der Tastvorrichtung, verbunden.

Damit die Feder unabhängig von der horizontalen Position des Auslegers, genauer gesagt des Angriffspunktes der Feder am Ausleger, immer dieselbe Kraftwirkung hat, sieht ein weiteres Ausführungsbeispiel der Erfindung vor, dass das Widerlager für die Feder horizontal bewegbar an der Kopierfräseinrichtung angeordnet ist. Eine konstruktiv einfache Lösung ergibt sich dabei wenn, das Widerlager an einer im Wesentlichen horizontalen, an einem vertikalen Träger angeordneten Haltevorrichtung verschiebbar gelagert ist. Somit ist sichergestellt, dass das Widerlager der Feder an der Haltevorrichtung dem Angriffspunkt der Feder am Ausleger im Falle einer Verkürzung bzw. Verlängerung des Auslegers folgen kann, sodass die Feder im Wesentlichen vertikal ausgerichtet bleibt. Um sicherzustellen, dass die Feder auch bei einer Verschwenkung des Auslegers um eine horizontale, zur Längsrichtung des Auslegers im Wesentlichen normalen Achse vertikal ausgerichtet bleibt, kann die Feder im Angriffspunkt am Ausleger beweglich, beispielsweise mittels eines Kugelkopfes, gelagert sein.

Ein weiteres Ausführungsbeispiel der Erfindung sieht vor, dass der Ausleger um eine vertikale Achse schwenkbar an der Kopierfräseinrichtung angeordnet ist. In diesem Fall hat es sich als günstig herausgestellt, wenn die Haltevorrichtung um die Längsachse des Trägers schwenkbar mit diesem verbunden ist, sodass das Widerlager der Feder an der Haltevorrichtung dem Angriffspunkt der Feder am Ausleger auch dann folgen kann, wenn der Ausleger um eine vertikale Achse verschwenkt wird.

Dies kann gemäß einer weiteren Ausführungsform der Erfindung auch dadurch erreicht werden, dass die Befestigungsvorrichtung für das Widerlager an der Haltevorrichtung wenigstens zwei sich kreuzende Linearführungen aufweist.

Versuche des Anmelders haben ergeben, dass eine besonders leichtgängige und praktische Bedienbarkeit der erfindungsgemäßen Kopierfräseinrichtung dann erreicht wird, wenn der vertikale Abstand der Haltevorrichtung von der Trägerplatte zwischen 15 cm und 60 cm, vorzugsweise etwa 35 cm, beträgt und die Federkonstante zwischen 5 N/m und 10 N/m, vorzugsweise bei etwa 7,3 N/m, liegt.

Eine weitere Ausführungsvariante der Erfindung, die ein besonders exaktes Kopieren des Modellkörpers bei möglichst geringem Kraftaufwand erlaubt, sieht vor, dass das motorisch angetriebene Bearbeitungswerkzeug im Gebrauchszustand für einen Benutzer zugänglich angeordnet bzw. anordenbar ist und ein Griffelement, mittels dem die Lage des Bearbeitungswerkzeuges und der damit mechanisch verbundenen Tastvorrichtung veränderbar ist, aufweist.

Es wird also im Gegensatz zu den bisher bekannten manuellen Kopierfräseinrichtungen die Lage des Bearbeitungswerkzeuges direkt verändert und die Tastvorrichtung über die mechanische Koppelung nachgeführt. Anders ausgedrückt fungiert das Bearbeitungswerkzeug als Master und die Tastvorrichtung als Slave, während beim Stand der Technik die Tastvorrichtung als Master fungiert und das Bearbeitungswerkzeug indirekt über die mechanische Koppelung bewegt wird. Mit dieser erfindungsgemäßen Anordnung wird nicht nur die zum Bewegen des Bearbeitungswerkzeuges notwendige Kraft geringer gehalten, es werden auch Ungenauigkeiten, die bei der Übertragung der Bewegung von der Tastvorrichtung zum Bearbeitungswerkzeug auftreten können, vermieden.

Wie bereits weiter oben erwähnt, ist die Bearbeitung von fertig gesinterten Formrohlingen aufwendig und langwierig. Ein weiteres Ausführungsbeispiel der Erfindung sieht daher vor, dass die mechanische Verbindung zwischen dem Bearbeitungswerkzeug und der Tastvorrichtung einen Verkleinerungs- und/oder Vergrößerungsmechanismus umfasst. Vorteilhaft ist dabei der Unter- bzw. Übersetzungsmechanismus von einem Storchenschnabel gebildet. Mit einer derart ausgebildeten Kopierfräseinrichtung wird erreicht, dass Werkstücke aus wesentlich leichter zu bearbeitenden Grünlingen oder vorgesinterten Formrohlingen hergestellt werden können und zwar unter Berücksichtigung des beim nachfolgenden Fertigsintem auftretenden Sinterungsschrumpfes.

Da der Schrumpfungsfaktor von oxidkeramischen Werkstoffen im Wesentlichen vom Herstellungsverfahren der Werkstoffe bzw. von den Temperaturen beim Vorsinterungsprozess abhängt, sieht ein bevorzugtes Ausführungsbeispiel der Erfindung vor, dass das Untersetzungsverhältnis vom Bearbeitungswerkzeug zur Tastvorrichtung zwischen 1 : 0,9 und 1 : 0,7 liegt, sodass eine Anpassung der Kopierfräseinrichtung an unterschiedliche Werkstoffe prinzipiell möglich ist. Neuerdings sind jedoch auch oxidkeramische Werkstoffe, insbesondere Zirkon, auf dem Markt erhältlich, bei denen alle Formrohlinge immer denselben Schrumpfungsfaktor, beispielsweise 25 %, aufweisen, weshalb ein besonders bevorzugtes Ausführungsbeispiel der Erfindung vorsieht, dass das Übersetzungsverhältnis bei ca. 1 : 0,8 liegt.

Dadurch ergeben sich für den einzelnen Zahnarzt bzw. das einzelne Dentallabor vollkommen neue Perspektiven. Die Herstellung des medizinischen Werkstückes anhand eines Modellkörpers muss nicht mehr, wie es bisher üblich war, außer Haus erfolgen, vielmehr kann der einzelne Zahnarzt oder das einzelne Dentallabor das Werkstück in einfacher Weise aus einem leicht zu bearbeitenden Grünling oder vorgesinterten Material im Kopierfräsverfahren herstellen und dieses hergestellte Werkstück dann in einem Brennofen fertig sintern. Dadurch, dass nunmehr der komplette Herstellungsprozess eines zahnmedizinischen Werkstückes in der Zahnarztpraxis oder im Dentallabor vonstatten gehen kann, ergibt sich eine enorme Kosten- und Zeitersparnis.

Um auch Werkstücke mit komplizierten Raumformen herstellen zu können, genügen die drei Bewegungsmöglichkeiten für den Ausleger - Drehen um eine vertikale Achse, Drehen um eine horizontale Achse und Verkürzen - nicht. Gemäß einem weiteren Ausführungsbeispiel der Erfindung ist daher vorgesehen, dass die Trägerplatte für den Modellkörper und den Formrohling um eine im Wesentlichen horizontale Achse drehbar, vorzugsweise über einen Winkel von 360°, an der Kopierfräseinrichtung angeordnet ist. Dabei kann die Anordnung der Trägerplatte derart erfolgen, dass die Lage der Trägerplatte in Stufen oder stufenlos veränderbar ist.

Gemäß einer weiteren Ausführungsvariante der Erfindung ist vorgesehen, dass der Modellkörper und der Formrohling vorzugsweise drehbar mittels eines vorzugsweise scheibenförmigen Haltelementes in der Trägerplatte anordenbar bzw. angeordnet sind, sodass aufgrund der drehbaren Halterung des Modellkörpers und des Formrohlings in der Trägerplatte die Kopierfräseinrichtung insgesamt fünf Freiheitsgrade aufweist, d. h. mit der erfindungsgemäßen Kopierfräseinrichtung kann in den selben fünf Ebenen gearbeitet werden, wie dies mit einer herkömmlichen 5-achs Fräse möglich ist.

Gemäß einer weiteren Ausführungsform der Erfindung, weist - in an sich bekannter Weise - das Bearbeitungswerkzeug ein Fräselement und die Tastvorrichtung ein Tastelement auf. Umfasst der Ausleger einen Verkleinerungs- bzw. Vergrößerungsmechanismus, ist gemäß einem weiteren Ausführungsbeispiel der Erfindung vorgesehen, dass das Fräselement und das Tastelement zumindest in den Abschnitten, in denen sie mit dem Modellkörper bzw. dem Formrohling in Kontakt treten, gleich geformt sind, wobei der Abschnitt des Fräselementes proportional größer, zwischen 10% und 40%, vorzugsweise etwa 25 %, als der Abschnitt des Tastelementes ist. Durch den Vergrößerungs- bzw. Verkleinerungsmechanismus am Ausleger und die proportionale Vergrößerung des Fräselementes gegenüber dem Tastelement wird insgesamt eine vollständige Skalierung des Werkstückes zum Modellkörper erreicht.

Um mit dem erfindungsgemäßen Kopierfräsgerät auch Hinterschnitte leichter bearbeiten zu können, sieht ein weiteres Ausführungsbeispiel der Erfindung vor, die Spitzen des Fräselementes und des Tastelementes im Querschnitt im Wesentlichen trapezförmig auszubilden, wobei die Verjüngung zum Schaft hin erfolgt.

Um die Feder der Aufhängevorrichtung zu entlasten, wenn die Kopierfräseinrichtung außer Gebrauch ist, sieht ein weiteres Ausführungsbeispiel der Erfindung vor, dass der Träger für die Haltevorrichtung ein Auflageelement für den Ausleger aufweist und/oder im Ausleger und im Träger Magnete zum lösbaren Fixieren des Auslegers am Träger angeordnet sind. Es kann also der Ausleger bei Nichtgebrauch der Kopierfräseinrichtung in einfacher Weise am Träger abgelegt werden.

Gemäß einer weiteren Ausführungsform der Erfindung weist die Kopierfräseinrichtung eine Basisplatte auf, an deren Unterseite ein Drehmechanismus zum Drehen der gesamten Kopierfräseinrichtung um eine vertikale Achse angeordnet ist, sodass der Benutzer der Kopierfräseinrichtung während des Kopierfräsvorganges seine Arbeitsposition nicht zu verändern braucht, auch wenn er das Werkstück allseitig bearbeitet. Dabei sieht ein weiteres Ausführungsbeispiel der Erfindung vor, dass der Drehmechanismus einen Drehbeschlag und vorzugsweise wenigstens ein Bremselement umfasst, sodass einerseits bei gleich bleibender Sitzposition immer eine optimale Sicht auf das zu fräsende Objekt gewährleistet ist und andererseits durch die Bremselemente die Drehbewegung gehemmt wird und damit ein ungewolltes Verdrehen des Gerätes verhindert wird.

Die erfindungsgemäße Kopierfräseinrichtung zeichnet sich also durch eine vorzugsweise um eine vertikale Achse drehbare Basisplatte, an der ein Ausleger mit einem Bearbeitungswerkzeug und einer Tastvorrichtung horizontal und vertikal schwenkbar angeordnet ist, wobei der Ausleger vorzugsweise als Storchenschnabel mit einem Übersetzungsverhältnis von ca. 1 : 0,8 ausgebildet ist und weiters einem an der Basisplatte drehbar angeordneten Träger mit einer Haltevorrichtung, an der das Widerlager einer auf den Ausleger wirkenden Zugfeder horizontal bewegbar angeordnet ist, sowie einer um eine horizontale Achse drehbar gelagerten Trägerplatte, an der vorzugsweise um eine vertikale Achse drehbar scheibenförmige Halteelemente zur Aufnahme wenigstens eines Formrohlings und eines Modellkörpers angeordnet sind, aus.

Die Trägerplatte der Kopierfräseinrichtung dient dabei zur Befestigung des Formrohlings, beispielsweise durch Ankleben. Meist wird an der Trägerplatte auch der Modellkörper befestigt.

Um zu verhindern, dass der beim Fräsen des Formrohlings entstehende Staub den Arbeitsvorgang behindert, sieht eine Ausführungsvariante der Erfindung vor, dass die Trägerplatte wenigstens eine Durchgangsöffnung aufweist, die derart angeordnet ist, dass der beim Fräsen des Formrohlings entstehende Staub durch sie hindurch tretbar ist.

Die erfindungsgemäße Maßnahme erlaubt das Absaugen des Staubs im Bereich der Unterseite der Trägerplatte, wodurch der Arbeitsvorgang, welcher sich im oberen Bereich der Trägerplatte abspielt, nicht behindert wird.

Beispielsweise kann vorgesehen sein, dass die Trägerplatte eine Öffnung aufweist, die zur Aufnahme des Formrohlings ausgebildet ist. Die Befestigung des Formrohlings kann mittels Klebepunkten erfolgen.

Besonders vorteilhaft ist es, wenn vorgesehen ist, dass an der Trägerplatte ein - vorzugsweise scheibenförmiges - Halteelement lösbar befestigbar ist, wobei das Halteelement die Öffnung für den Formrohling aufweist. Diese Maßnahme gestattet es, den Formrohling außerhalb der Trägerplatte am Halteelement anzubringen und dann das Halteelement samt Formrohling an der Trägerplatte zu befestigen.

Die Befestigung des Halteelements an der Trägerplatte kann vorzugsweise durch zweiteilige Einsätze erfolgen. Diese zweigeteilten Einsätze können um vertikale Achsen gedreht werden, beispielsweise mit einer 90°-Teilung, und werden mittels zweier Konusschrauben fixiert. Dabei ist der obere Teil des Einsatzes so gestaltet, dass durch leichtes Lösen der beiden Konuschrauben und Drehen des Oberteiles um wenige Grade die scheibenförmigen Halteelemente sehr schnell gewechselt werden können.

Bei Verwendung gesonderter Halteelemente bietet es sich an, die wenigstens eine Durchgangsöffnung ebenfalls am Halteelement auszubilden.

Um eine leichte Verdrehbarkeit des Halteelements um eine vertikale Achse sicherzustellen, kann beispielsweise vorgesehen sein, dass das Halteelement einen kreisförmigen Umfangsrand aufweist.

Eine konstruktiv besonders einfache Möglichkeit, ein Halteelement herzustellen, besteht darin, das Halteelement in Form eines Ringes auszubilden, wobei der Ring von zwei Stegen so durchquert wird, dass der Innenbereich des Ringes drei Öffnungen aufweist. Die zentrale Öffnung kann dabei zur Befestigung des Formrohlings dienen. Die beiden flankierenden Öffnungen bildeten die Durchgangsöffnungen für den beim Fräsen des Formrohlings entstehenden Staub.

Weitere Einzelheiten der Erfindung und der durch sie erzielten Vorteile ergeben sich aus der nachstehenden Erläuterung der in der Zeichnung dargestellten Ausführungsbeispiele der erfindungsgemäßen Kopierfräseinrichtung. Darin zeigt:
- Fig. 1: perspektivisch ein Ausführungsbeispiel der Erfindung von oben,
- Fig. 2: perspektivisch ein Ausführungsbeispiel der Erfindung von unten,
- Fig. 3a, 3b, 3c: eine Seitenansicht, eine Hinteransicht und eine Vorderansicht einer erfindungsgemäßen Kopierfräseinrichtung,
- Fig. 4: perspektivisch die Trägerplatte und einen Teil des Auslegers,
- Fig. 5: schematisch die Anordnung des Formrohlings und des Modellkörpers in der Trägerplatte,
- Fig. 6: das Anordnungsprinzip der Halteelemente in der Trägerplatte,
- Fig. 7: ein weiteres Ausführungsbeispiel einer Haltevorrichtung für das Widerlager der Feder an der Aufhängevorrichtung,
- Fig. 8: das Lagerungskonzept zweier miteinander beweglich verbundener Hebel des Auslegers,
- Fig. 9a, 9b: ein Ausführungsbeispiel für ein Fräselement und ein Tastelement,
- Fig. 10: in perspektivischer Ansicht eine weitere Ausführungsvariante der Erfindung,
- Fig. 11a, 11b: Detailansichten einer Trägerplatte mit daran befestigtem Formrohling,
- Fig. 12a - 12d: Ausführungsbeispiele von unterschiedlich ausgestalteten Halte- elementen,
- Fig. 13: eine Explosionsdarstellung einer Trägerplatte mit zweiteiligen Einsätzen, und
- Fig. 14: eine Teilansicht einer Kopierfräseinrichtung mit einer Absaug- vorrichtung.

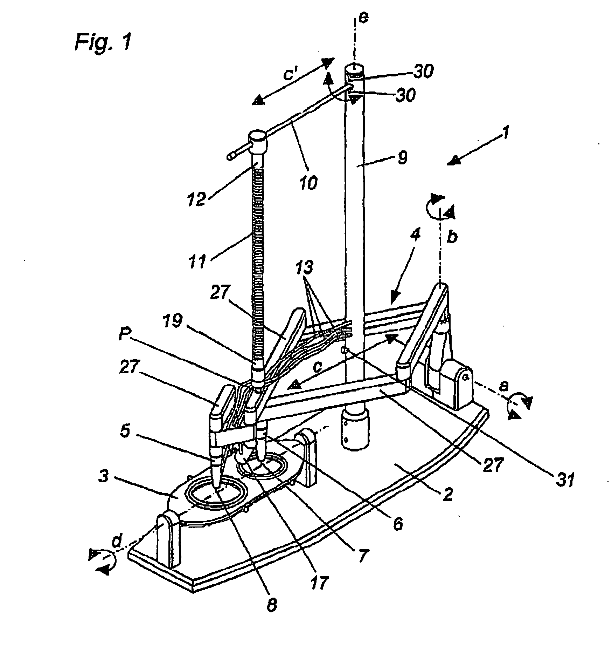

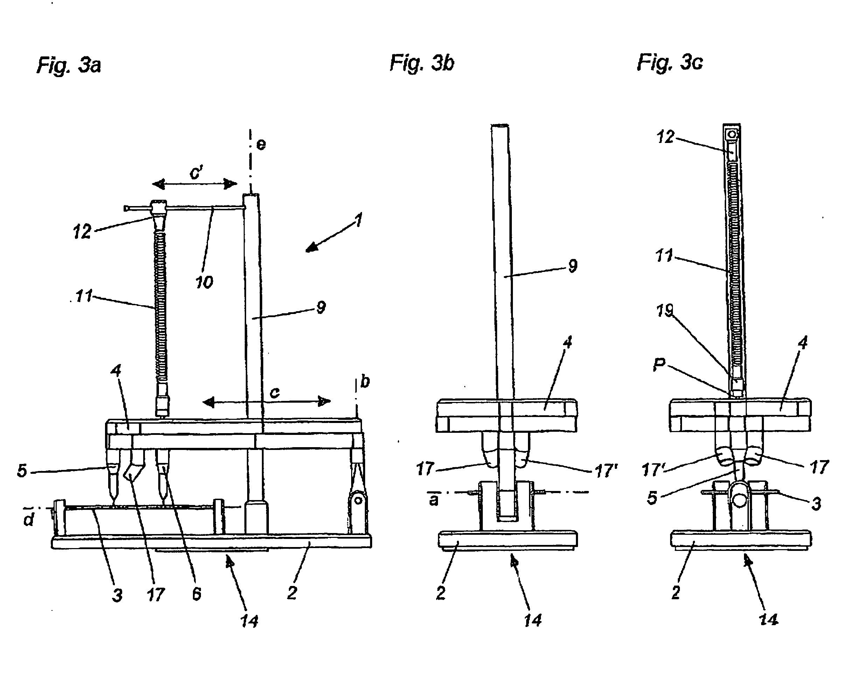

Das in den Figuren 1 bis 3 in unterschiedlichen Ansichten dargestellte Ausführungsbeispiel einer erfindungsgemäßen Kopierfräseinrichtung 1 weist eine Basisplatte 2 auf, an deren Unterseite ein Drehmechanismus 14 angeordnet ist. Der Drehmechanismus 14 umfasst einen Drehbeschlag 15 und Bremselemente 16. Aufgrund des Drehbeschlages 15 ist es möglich, die Kopierfräseinrichtung 1 über 360° um eine vertikale Achse zu drehen und damit eine optimale Einsicht auf das zu fräsende Objekt bei gleich bleibender Sitzposition des Bedieners zu gewährleisten. Das heißt, es kann während eines Fräsvorganges immer ein optimaler Blickwinkel eingestellt werden. Die Drehbewegung wird durch die Bremselemente 16 etwas gehemmt, damit ein ungewolltes Verdrehen der Kopierfräseinrichtung 1 verhindert wird.

Auf der Basisplatte 2 ist, vorzugsweise am Rand derselben, der Ausleger 4 montiert. Der Ausleger 4 kann um eine horizontale, zur Längsrichtung des Auslegers 4 im Wesentlichen normale Achse a sowie um eine vertikale Achse b verschwenkt werden. Der Ausleger 4 weist mehrere miteinander drehgelenkig verbundene Hebel 27 auf, deren Anordnung einem sogenannten Storchenschnabel entspricht. Auf der der Basisplatte 2 der Kopierfräseinrichtung 1 zugewandten Seite des Auslegers 4 sind am Ausleger 4 ein motorisch angetriebenes Bearbeitungswerkzeug 5 sowie eine Tastvorrichtung 6 angeordnet. Durch die Ausbildung des Auslegers 4 in Form eines Pantographen ergibt sich zwischen der Bewegung der Tastvorrichtung 6 und des motorisch angetriebenen Bearbeitungswerkzeuges 5 ein Übersetzungsverhältnis von cirka 25%. Neben den beiden Drehbewegungen um die Achsen a und b kann der Ausleger 4 zusätzlich in Längsrichtung c verkürzt beziehungsweise verlängert werden, sodass der Ausleger 4 im Wesentlichen in drei Richtungen bewegt werden kann.

Ebenfalls auf der Basisplatte 2 ist ein vertikaler Träger 9 angeordnet, an dessem der Basisplatte 2 abgewandten Ende eine Haltevorrichtung 10 für ein Widerlager 12 einer Feder 11 im Wesentlichen horizontal angebracht ist. Dabei kann die Haltevorrichtung 10 um die Längsachse e des Trägers 9 verschwenkt werden. Das Widerlager 12 für die Feder 11 ist an der Haltevorrichtung 10 in Längsrichtung c' der Haltevorrichtung 10 verschiebbar gelagert. Auf diese Weise wird sichergestellt, dass das Widerlager 12 der Feder 11 dem Angriffspunkt P der Feder 11 am Ausleger 4 bei horizontalen Lageänderungen des Auslegers 4 folgen kann, sodass die Feder 11 während des gesamten Fräsvorganges im Wesentlichen vertikal ausgerichtet ist. Um ein leichtes Gleiten des Widerlagers 12 an der Halteeinrichtung 10 zu ermöglichen, kann die Haltevorrichtung 10 mittels Klemmschrauben 30 horizontal ausgerichtet werden.

Um während des Fräsens den benötigten Kraftaufwand variieren zu können, ist es mithilfe einer drehbaren Hülse 19 möglich, die Spannung der Feder 11 zu erhöhen beziehungsweise zu verringern und damit die Ruhestellung des Auslegers 4 höher beziehungsweise tiefer zu stellen.

Der Träger 9 ist an der Basisplatte 2 derart positioniert, dass er den Benutzer der Kopierfräseinrichtung 1 während seiner Arbeit nicht behindert. Zusätzlich ist der Träger 9 hohl ausgebildet, sodass im Träger 9 Leitungen 13 geführt werden können, wodurch die Kopierfräseinrichtung 1 um ihre Achse gedreht werden kann, ohne dass es zu einem Verheddern der Leitungen 13 kommt. Die Leitungen 13 können dabei Stromversorgungskabel für das motorisch angetriebene Bearbeitungswerkzeug 5 beziehungsweise die Leuchtelemente 17 umfassen. Aber auch Luftleitungen, die den Frässtaub vom Arbeitsplatz absaugen beziehungsweise wegblasen, können problemlos im Träger 9 geführt sein.

So kann die Kopierfräseinrichtung eine Luftzuführeinrichtung aufweisen, mittels der im Inneren des Bearbeitungswerkzeuges stetig ein leichter Überdruck erzeugt wird. Dieser Überdruck verhindert, dass Staubpartikel in den Antrieb, speziell in die Lagerung des Antriebes, des Bearbeitungswerkzeuges gelangen können. Vorteilhaft kann über diese Luftzufuhreinrichtung mittels einer Bypassleitung und eines fußbetätigten Ventils im Bedarfsfall ein weit höherer Luftdruck, der zum Abblasen des zu fräsenden Objektes dient, zugeführt werden. Würde dieser hohe Luftdruck ständig vorliegen, käme es zu einer sehr hohen Staubentwicklung, was die Absaugung des Frässtaubes erschweren würde. Zur bedarfsgerechten Anpassung können sowohl der niedere Dauerdruck als auch der hohe Abblasdruck über einen Druckregler individuell und unabhängig vom in der Luftzufuhreinrichtung herrschenden Luftdruck eingestellt werden.

Weiters ist am Träger 9 ein Auflageelement 31 für den Ausleger 4 montiert, um den Ausleger 4 am Träger 9 in einer festen Position zu halten. Zusätzlich können am Ausleger 4 und/oder am Träger 9 im Bereich des Auflageelementes 31 Magnete angeordnet sein, die das Halten des Auslegers 4 am Träger 9 unterstützen.

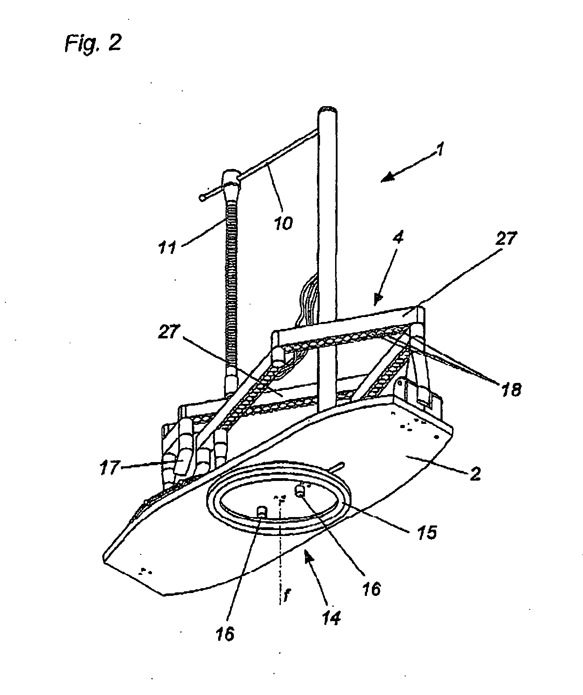

Wie aus Fig. 2 ersichtlich, weisen die Hebel 27 des Auslegers 4 Hohlräume 18 auf. Dies hat den Zweck, das Gewicht des Auslegers 4 möglichst gering zu halten, um auf diese Weise eine Feder 11 mit einer niedrigen Federkonstante verwenden zu können, was eine leichtgängige Bedienung der Kopierfräseinrichtung 1 zur Folge hat. Versuche des Anmelders haben ergeben, dass ein optimaler Ausgleich des Gewichtes des Auslegers 4 dann gegeben ist, wenn die Federkonstante der Feder 11 bei etwa 7,3 Nm liegt.

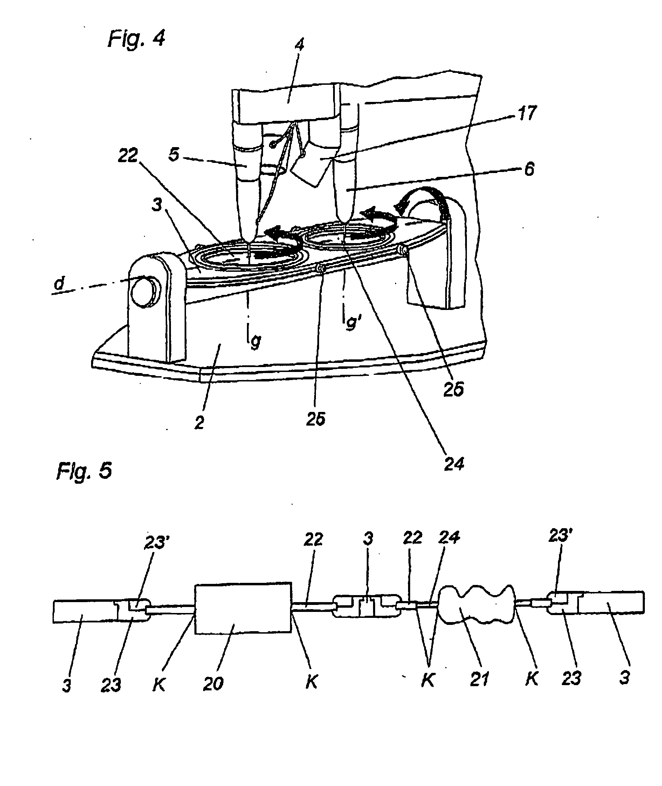

Weiters ist auf der Basisplatte 2 eine Trägerplatte 3, die zur Aufnahme des Modellkörpers und des Formrohlings ausgebildet ist, um eine horizontale Achse d drehbar gelagert angeordnet. Wie aus Fig. 4 ersichtlich kann die Trägerplatte 3 um 360° um die horizontale Achse d gedreht werden. Beim dargestellten Ausführungsbeispiel kann die Trägerplatte 3 über einen nicht dargestellten Konus alle 30° blockiert werden. Diese Drehbarkeit der Trägerplatte 3 erlaubt es, Hinterschnitte problemlos zu realisieren.

In der Trägerplatte 3 sind Ober scheibenförmige Halteelemente 22, 24 der Modellkörper 21 beziehungsweise der Formrohling 20 um vertikale Achsen g, g' drehbar gelagert. Durch diese spezielle Lagerung der Trägerplatte 3 sowie der scheibenförmigen Haltelemente 22, 24 ist es möglich, den Modellkörper und den Formrohling um zwei zueinander normale Achsen zu drehen. Zusammen mit den drei Bewegungsrichtungen, die für den Ausleger 4 zur Verfügung stehen, umfasst die erfindungsgemäße Kopierfräseinrichtung also insgesamt fünf Bewegungsachsen.

Fig. 5 zeigt schematisch die Anordnung des Formrohlings 20 und des Modellkörpers 21 in der Trägerplatte 3. Dabei erfolgt das Einspannen des Modellkörpers 21 und des Formrohlings 20 durch Einkleben in scheibenförmige Halteelemente 22 beziehungsweise 24. Durch das Einkleben werden keine Spannungseinwirkungen auf den Formrohling 20 beziehungsweise den Modellkörper 21 übertragen. Das Halteelement 22 für den Formrohling 20 ist ein vorgefertigtes Aluminiumteil, während das Halteelement 24 für den Modellkörper 21 aus einem fräsbaren Kunststoff hergestellt ist, wodurch eine optimale und schnelle Befestigung des Modellkörpers 21 erreicht wird. Der Modellkörper 21 und der Formrohling 20 werden an den Halteelementen 22 und 24 durch Festkleben an den Klebepunkten K fixiert.

Die Befestigung der Halteelemente 22 beziehungsweise 24 in der Trägerplatte 3 erfolgt mittels zweiteiliger Einsätze 23, 23'. Diese zweigeteilten Einsätze 23, 23' können um die vertikalen Achsen g, g' gedreht werden, beispielsweise mit einer 90°-Teilung, und werden mittels zweier Konusschrauben fixiert. Dabei ist der obere Teil des Einsatzes 23' so gestaltet, dass durch leichtes Lösen der beiden Konusschrauben 25 und Drehen des Oberteiles 23' um wenige Grade die scheibenförmigen Haltelemente 22 beziehungsweise 24 sehr schnell gewechselt werden können.

Während das scheibenförmige Halteelement 22 für den Formrohling 20 aus Aluminium hergestellt sein kann, hat es sich für das scheibenförmige Halteelement 24 für den Modellkörper 21 als günstig herausgestellt, wenn dieses Halteelement 24 aus fräsbarem Kunststoff hergestellt ist. Dabei wird zuerst die Kunststoffscheibe in eine Aluscheibe eingeklebt, nachher der erforderliche Durchbruch im Halteelement 24 für den Modellkörper 21 herausgefräst und dann der Modellkörper 21, beispielsweise mittels Schnellkleber, in das Halteelement 24 eingeklebt. Obwohl es nicht notwendig wäre, das Halteelement 24 aus Kunststoff in ein Halteelement 22 aus Aluminium einzukleben, hat sich diese Maßnahme als günstig herausgestellt, weil dadurch das Halteelement 24 aus Kunststoff kleiner gehalten werden kann und damit stabiler ist.

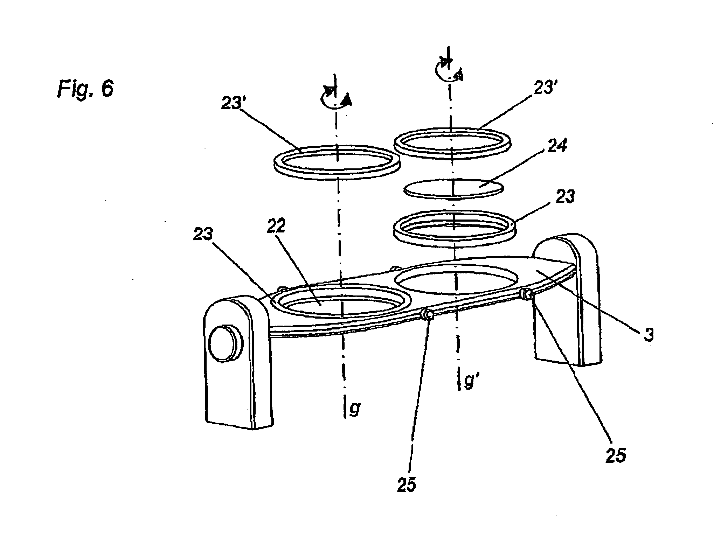

Fig. 6 zeigt in einer Explosionsdarstellung die Anordnung der Halteelemente 22 und 24 in der Trägerplatte 3. Dabei wird in die Durchtrittsöffnung der Trägerplatte 3 zuerst der untere Teil 23 des zweiteiligen Einsatzes eingelegt. Danach folgen das Haltelement 22 beziehungsweise 24, welche nun mit dem oberen Teil 23 des zweiteiligen Einsatzes festgeklemmt werden. Die zweiteiligen Einsätze 23, 23' können wie bereits erwähnt um die vertikalen Achsen g, g' gedreht und mittels der Konusschrauben 25 fixiert werden.

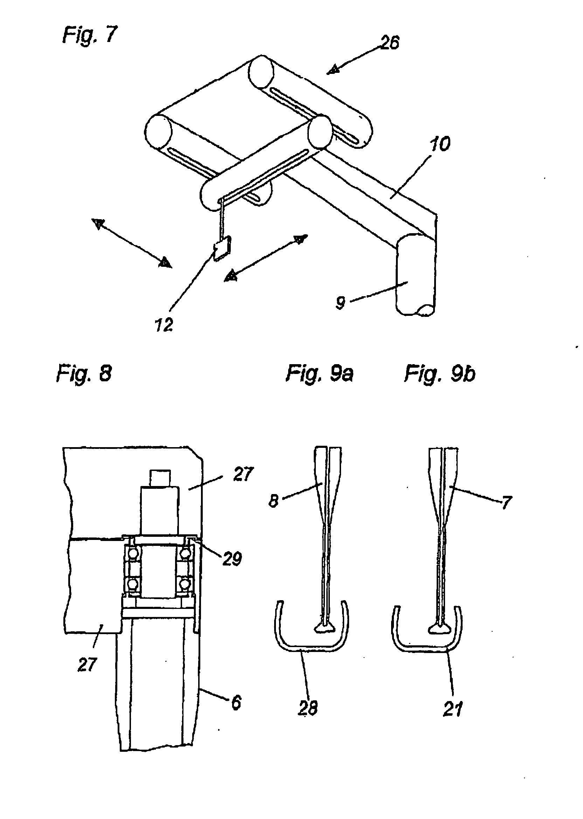

Fig. 7 zeigt eine weitere Möglichkeit, das Widerlager 12 für die Feder 11 an einer Haltevorrichtung 10 horizontal bewegbar anzuordnen. Bei diesem Ausführungsbeispiel ist die Haltevorrichtung 10 starr mit dem Träger 9 verbunden, verfügt jedoch über eine Befestigungsvorrichtung 26 für das Widerlager 12. Dabei weist die Befestigungsvorrichtung 26 zwei sich kreuzende Linearführungen auf, sodass das Widerlager 12 wiederum den horizontalen Bewegungen des Angriffspunktes P für die Feder 11 am Ausleger 4 folgen kann.

Fig. 8 zeigt das Lagerungskonzept zweier Hebel 27 des Auslegers 4. Im Gegensatz zum Stand der Technik, der sich in der Regel einer sogenannten Gabellagerung bedient, wurde bei der erfindungsgemäßen Kopierfräseinrichtung 1 eine einseitige Lagerung konstruiert, die den Vorteil mit sich bringt, dass die Hebel 27 wesentlich kleiner gestaltet werden können, was ein optimales Handling des Auslegers 4 beim Fräsen gewährleistet. Die Lagereinheit selbst besteht aus zwei Lagern, einer Distanzbuchse und einer Welle. Dabei werden die Lager leicht vorgespannt auf die Welle aufgeklebt, sodass die Lagereinheit im Schadensfall in einfacher Weise ausgetauscht werden kann, da sie ja nur von einer Seite her montiert werden muss. Um das Eindringen von Frässtaub in die Lagereinheit zu verhindern, wurden am unteren Hebel Schutznasen 29 angeordnet, die in den oberen Hebel eingreifen.

In den Fig. 9a und 9b ist ein Fräselement 8 und ein Tastelement 7 dargestellt. Um eine vollständige Skalierung des zahntechnischen Werkstückes 28 zum Formrohling 21 zu erlangen, muss nicht nur der Ausleger ein Übersetzungsverhältnis aufweisen, sondern auch die eingesetzte Fräser-Taster-Kombination muss dasselbe Größenverhältnis aufweisen. Beim dargestellten Ausführungsbeispiel ist der Fräser um 25% größer, sowohl im Durchmesser als auch die Radien, als der Taster. Durch die spezielle trapezförmige Ausformung der Spitzen des Fräselementes 8 und des Tastelementes 7 können Hinterschnitte problemlos realisiert werden. In diesem Zusammenhang sei noch angemerkt, dass man grundsätzlich zwischen Schlichtfräsern und Schruppfräsern unterscheidet. Während bei Schlichtfräsem das Verhältnis von Fräser zu Taster exakt dem Übersetzungsverhältnis des Auslegers angepasst sein muss, wird bei Schruppfräsem der Fräser etwas kleiner gestaltet, um für die anschließende Schlichtbearbeitung noch Restmaterial zur Verfügung zu haben.

Das Fräselement 8 und das Tastelement 7 werden in eine Aufnahme eingeklebt und genau auf die gleiche Einspannlänge abgestimmt. Dadurch ist der Fräser- und Tasterwechsel ohne langwieriges Abstimmen der Längen möglich. Zur Erreichung eines optimalen Werkzeug-Schnellwechsel-Systems sind die Fräser und Taster auf dieselbe Länge abgestimmt, wobei das Fräselement 8 und das Tastelement 7 mittels einer Schnellspannzange angeklemmt werden. Dabei wurde die Montageart der Spindel des motorisch angetriebenen Bearbeitungswerkzeuges 5 und der Tastvorrichtung 6 so gewählt, dass die Halterung so kurz wie möglich gehalten ist, um Vibrationen auf ein Minimum zu reduzieren. Dies wird bei der erfindungsgemäßen Kopierfräseinrichtung 1 erreicht, indem man die Spindel an der Unterseite eines Hebels 27 anschraubt.

Ebenso sind die zwei Lichtquellen 17 der Kopierfräseinrichtung 1 direkt an der Unterseite der Hebel 27 befestigt, wodurch eine optimale Ausleuchtung des Werkstücks in jeder Position gewährleistet ist, da der Lichtkegel der Lichtquelle stets dem Fräselement 8 folgt.

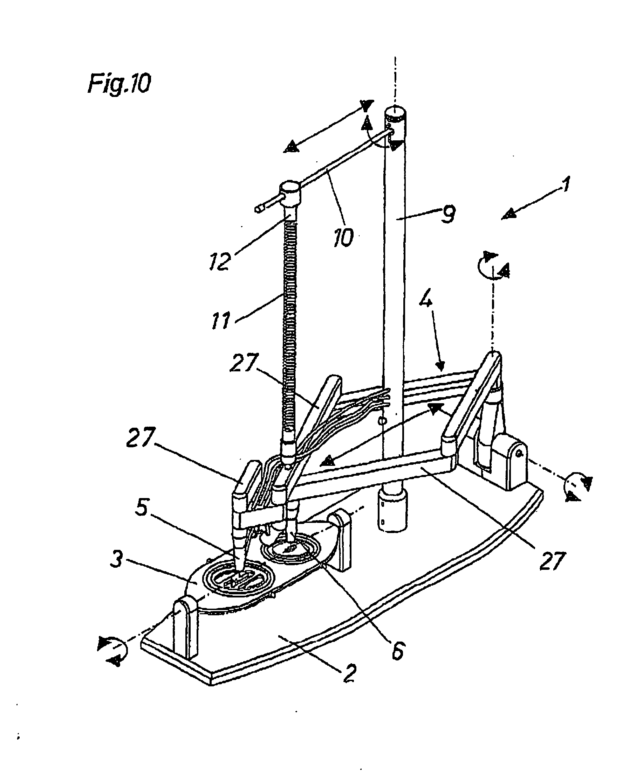

In Fig. 10 ist schematisch eine weitere Ausführungsvariante einer Kopierfräseinrichtung 1 dargestellt, wobei insbesondere die Trägerplatte 3 erkennbar ist. Auf einer Basisplatte 2 ist ein vertikaler Träger 9 angeordnet, an dem über eine Haltevorrichtung 10 ein Widerlager 12 für eine Feder 11 gelagert ist. Das Widerlager 12 ist an der Haltevorrichtung 10 in Längsrichtung der Haltevorrichtung 10 verschiebbar gelagert. Auf diese Weise wird sichergestellt, dass das Widerlager 12 der Feder 11 dem Angriffspunkt der Feder 11 am Ausleger 4 bei Lageänderungen folgen kann, sodass die Feder 11 während des gesamten Fräsvorganges im Wesentlichen vertikal ausgerichtet ist. Über eine storchenschnabelartige Anordnung von miteinander drehwinklig verbundenen Hebeln 18 sind ein motorisch angetriebenes Bearbeitungswerkzeug 5 zum Fräsen des Formrohlings 20 sowie eine Tastvorrichtung 6 zum Abtasten des Modellkörpers angeordnet.

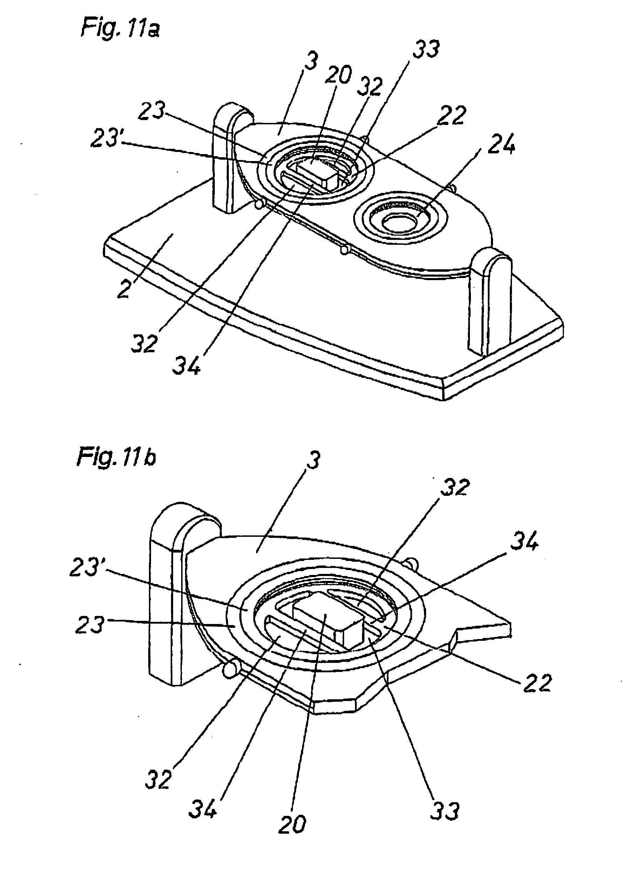

Die Fig. 11a und 11b zeigen in unterschiedlichen Vergräßerungsstufen eine Detailansicht der Trägerplatte 3. Erkennbar ist, dass die Trägerplatte 3 ein Halteelement 22 für einen Formrohling 20 aufweist, wobei das Halteelement 22 mittels zweiteiliger Einsätze 23, 23' an der Trägerplatte 3 befestigt ist. Der Formrohling 20 ist durch Klebepunkte an den Stegen 34 des Halteelements 22 befestigt. Gut erkennbar sind die beidseitig des Formrohlings 20 angeordneten Durchgangsöffnungen 32, durch welche der beim Fräsen des Formrohlings 20 entstehende Staub in Richtung der Basisplatte 12 durch die Trägerplatte 3 hindurch treten kann. Ebenso erkennbar ist, dass an einem weiteren Halteelement 24 ein in den Fig. 2a und 2b nicht dargestellter Modellkörper an der Trägerplatte 3 befestigt werden kann. Da im Bereich des Modellkörpers kein Staub entsteht, ist es nicht notwendig, das Halteelement 24 mit Durchgangsöffnungen 32 zu versehen.

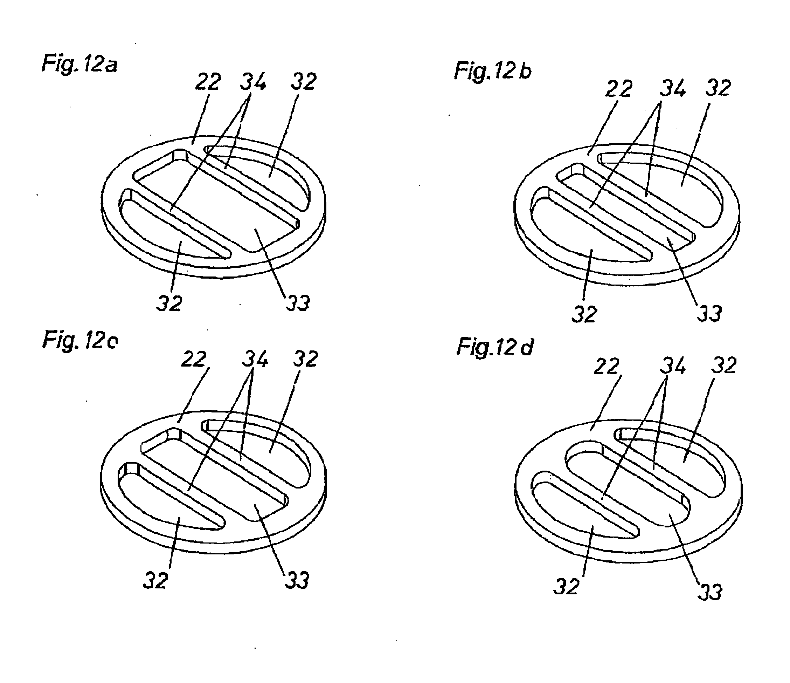

Verschiedene Möglichkeiten zur Ausgestaltung des Halteelements 22 gehen aus den Fig. 12a bis 12d hervor. Durch die unterschiedlichen Ausführungsmöglichkeiten können unterschiedlichste Formrohlinge am Halteelement 22 angeordnet werden. Erkennbar ist, dass jeweils ein Halteelement 22 in Form eines Kreisringes gewählt wurde, wobei zwei Stege 34 derart verlaufen, dass das Innere des Kreisrings drei Öffnungen 32, 33 aufweist. In der zentralen Öffnung 33 kann dabei jeweils der Formrohling befestigt werden. Die Durchgangsöffnungen 32 dienen zum Abführen des beim Fräsen entstehenden Staubes.

Die Form des Halteelements 22 ist nicht auf die in den Fig. 12a bis 12d dargestellte Form beschränkt. Obwohl die in den Fig. 12a bis 12d dargestellte Ausbildung mit einem kreisförmigen Umfangsrand wegen der leichten Verdrehbarkeit in der Ebene der Trägerplatte 3 besonders vorteilhaft ist, sind prinzipiell auch andere Ausbildungen wie beispielsweise mit einem polygonalen Umfangsrand denkbar.

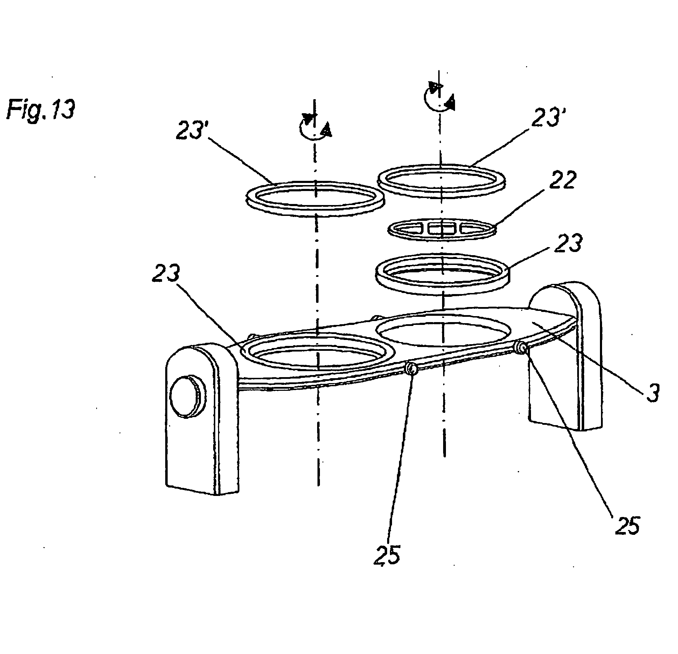

In Fig. 13, welche eine Explosionsdarstellung zeigt, wird die Befestigung des Halteelements 22 an der Trägerplatte 3 mittels der zweiteiligen Einsätze 23, 23' erkennbar. Dabei wird in die Durchtrittsöffnung der Trägerplatte 3 zuerst der untere Teil 23 des zweiteiligen Einsatzes 23, 23' eingelegt. Danach folgt das Halteelement 22, welches mit dem oberen Teil 23' des zweiteiligen Einsatzes 23, 23' festgeklemmt wird. Die zweiteiligen Einsätze 23, 23' können um die dargestellte vertikale Achse gedreht und mittels der Konusschrauben 25 fixiert werden. In Fig. 13 ist auf der linken Seite eine weitere Durchtrittsöffnung für ein nicht dargestelltes Halteelement 24 für den Modellkörper erkennbar. Auch dieses Halteelement 24 kann über die zweiteiligen Einsätze 23, 23' an der Trägerplatte 3 befestigt werden.

Das Halteelement 22 für den Formrohling 20 kann beispielsweise aus Aluminium hergestellt werden. Es hat sich als günstig herausgestellt, das Halteelement 24 für den Modellkörper aus fräsbarem Kunststoff herzustellen. Dabei wird zuerst die Kunststoffscheibe in eine Aluscheibe eingeklebt, nachher der erforderliche Durchbruch im Halteelement 24 für den Modellkörper herausgefräst und der Modellkörper beispielsweise mittels Schnellkleber in das Halteelement 24 eingeklebt.

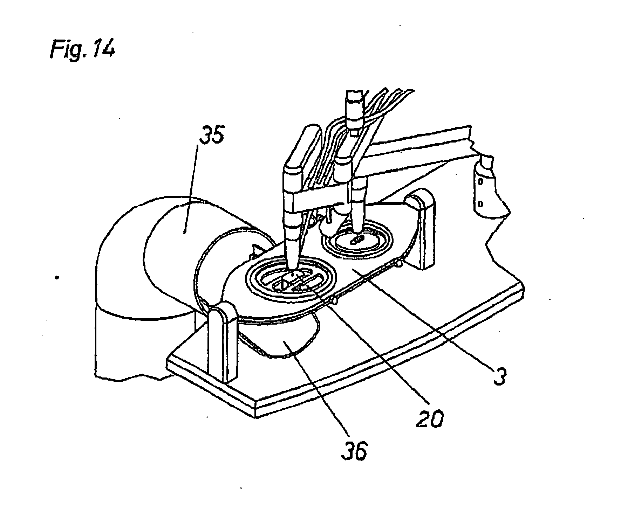

Fig. 14 zeigt schematisch die Anordnung einer Absaugvorrichtung 35 zum Entfernen des beim Fräsen des Formrohlings 20 entstehenden Staubs. Der Staub kann dabei durch die Durchgangsöffnungen 32 durch die Trägerplatte 3 hindurch treten und wird durch ein vorzugsweise angeordnetes Blech 36 aufgefangen und mittels der Absaugvorrichtung 35 entfernt.

Die dargestellten Ausführungsbeispiele einer mechanischen Kopierfräseinrichtung sind selbstverständlich nicht in einschränkendem Sinne zu verstehen, sondern eben nur als einzelne Beispiele der Erfindung.

## Patentansprüche

1. Kopierfräseinrichtung (1) zur Herstellung von zahntechnischen Werkstücken, mit einer Trägerplatte (3) für einen Modellkörper (21) und einen Formrohling (20) und, einem Ausleger (4) mlt einem motorisch angetriebenen Bearbeitungswerkzeug (5) zur spanenden Formung eines Werkstückes aus dem Formrohling (20) und einer Tastvorrichtung (6) zum Abtasten des Modellkörpers (21), wobei der Ausleger (4) um eine horizontale, zur Längsrichtung des Auslegers (4) im Wesentlichen normalen Achse (a) schwenkbar angeordnet ist, wobei das Bearbeitungswerkzeug (5) und die Tastvorrichtung (6) mechanisch und synchron bewegbar verbunden sind, **dadurch gekennzeichnet, dass** der Modellkörper (21) mittels eines scheibenförmigen Halteelementes (22, 24) in der Trägerplatte (3) angeordnet ist und dass das scheibenförmige Halteelement (22, 24) aus fräsbarem Kunststoff besteht, wobei der Modellkörper (21) in eine Aufnahmeöffnung des scheibenförmigen Halteelements (22, 24) eingeklebt ist und wobei der Umriss der Aufnahmeöffnung der Kontur des Modellkörpers (21) angepasst ist..

2. Kopierfräseinrichtung nach Anspruch 1, **dadurch gekennzeichnet, dass** die Trägerplatte (3) um eine im Wesentlichen horizontale Achse (d) drehbar an der Kopierfräseinrichtung (1) angeordnet ist.

## Claims

1. A copy milling device (1) for the production of dental workpieces, comprising a carrier plate (3) for a model body (21) and a shaping blank (20), and an arm (4) having a motor-driven machining tool (5) for cutting shaping of a workpiece from the shaping blank (20) and a scanning device (6) for scanning the model portion (21), wherein the arm (4) is arranged pivotably about a horizontal axis (a) substantially normal to the longitudinal direction of the arm (4), wherein the machining tool (5) and the scanning device (6) are mechanically and synchronously movably connected, **characterized in that** the model portion (21) is arranged in the carrier plate (3) by means of a disc-shaped holding element (22, 24) and **in that** the disc-shaped holding element (22, 24) is of a plastic material which can be milled, wherein the model body (21) is glued into a receiving opening of the disc-shaped holding element (22, 24) and wherein the outline of the receiving opening is adapted to the contour of the model body (21).

2. A copy milling device according to claim 1, **characterized in that** the carrier plate (3) is arranged pivotably about a substantially horizontal axis (d) on the copy milling device (1).

## Revendications

1. Dispositif de fraisage par copiage (1) destiné à la fabrication de pièces à usiner dentaires, dotés d'une plaque de support (3) pour un corps de modèle (21) et une ébauche moulée (20) et d'un bras orientable (4) comprenant un outil d'usinage (5) à entraînement motorisé destiné au façonnage par enlèvement de copeaux d'une pièce à usiner à partir de l'ébauche moulée (20), et d'un dispositif de balayage (6) destiné au balayage du corps de modèle (21), le bras orientable (4) étant monté de manière pivotante autour d'un axe (a) sensiblement normal à la direction longitudinale du bras orientable (4), l'outil d'usinage (5) et le dispositif de balayage (6) étant reliés mobiles de manière mécanique et synchrone, **caractérisé en ce que** le corps de modèle (21) est disposé dans la plaque de support (3) au moyen d'un élément de retenue en forme de disque (22, 24) et **en ce que** l'élément de retenue en forme de disque (22, 24) est constitué d'une matière plastique pouvant être fraisée, le corps de modèle (21) étant collé dans une ouverture de réception de l'élément de retenue en forme de disque (22, 24) et le contour de l'ouverture de réception étant adapté au contour du corps de modèle (21).

2. Dispositif de fraisage par copiage selon la revendication 1, **caractérisé en ce que** la plaque de support (3) est disposée sur le dispositif de fraisage par copiage (1) de manière à pouvoir tourner autour d'un axe (d) sensiblement horizontal.
